# EUROPÄISCHE PATENTSCHRIFT

(11) **EP 0 632 238 B1**
(45) Veröffentlichungstag und Bekanntmachung des Hinweises auf die Patenterteilung: **01.07.1998**
(21) Anmeldenummer: 93119495.5
(22) Anmeldetag: 03.12.1993
(51) Int. Cl.: F24H 8/00, F28D 21/00

(54) **Verfahren und Vorrichtung zur Rückgewinnung von Wärme aus den Abgasen von Feuerungsanlagen mit einem Wärmetauscher**
Method and apparatus for the recuperation of heat from flue gases of furnaces with a heat exchanger
Procédé et dispositif pour la récupération de chaleur de gaz d'échappement de furneaux avec échangeur de chaleur

(30) Priorität: 01.07.1993 DE 4321878
(43) Veröffentlichungstag der Anmeldung: 04.01.1995
(73) Patentinhaber: Höfer, Hendrik, D-53604 Bad Honnef (DE)
(72) Erfinder: Höfer, Hendrik, D-53604 Bad Honnef (DE)
(74) Vertreter: Müller-Gerbes, Margot, Dipl.-Ing.

(56) Entgegenhaltungen:
- DE-A- 3 225 926
- NL-A- 7 612 508

## Beschreibung

Die Erfindung betrifft ein Verfahren zur Rückgewinnung von Wärme aus den Abgasen von Feuerungsanlagen für Heizkessel mit einem im Heizkreis geführten Medium zum Abkühlen der Abgase beim Durchleiten der Abgase von oben nach unten durch einen mehrstufigen Wärmetauscher, wobei die Stufen des Wärmetauschers von dem wärmeaufnahmebereiten Medium des Heizungsrücklaufes des Heizkreises horizontal durchströmt werden und die Abgase in der letzten Stufe des Wärmetauschers bis unter den Wassertaupunkt unter Kondensatbildung abgekühlt und nachfolgend zur Erzielung eines ausreichenden thermischen Auftriebs im Kamin bis über den Wassertaupunkt erwärmt werden, wobei die bis unter den Wassertaupunkt abgekühlten Abgase im Wärmekontakt mit den heißen aus dem Heizkessel austretenden Abgasen durch Kreuzen der die kalten bzw. heißen Abgase führenden Leitungen im Bereich der Zuführung der heißen Abgase zu dem Wärmetauscher zwecks Wiedererwärmung gebracht werden, wobei die kalten Abgase horizontal und die heißen Abgase vertikal von oben nach unten geführt werden.

Verfahren und Vorrichtungen zum Rückgewinnen von Wärme aus den Abgasen von Feuerungsanlagen sind in unterschiedlichen Ausführungen bekannt, wozu nur beispielsweise auf die DE 39 11 276 C1, DE 34 06 989 C2, DE 32 17 782, DE 41 12 552 C1 oder DE 40 32 264 A1 verwiesen wird. Aus diesen Druckschriften sind auch Vorrichtungen zur Rückgewinnung von trockener und latenter Wärme bekannt, bei denen im wesentlichen die in den heißen Abgasen enthaltenen Schwefeldioxidanteile unter den Taupunkt abgekühlt und ausgefällt wird und gleichzeitig die anfallende Abwärme und Kondensationswärme genutzt werden soll.

Um einen ausreichenden thermischen Auftrieb der bis unter den Wassertaupunkt abgekühlten Abgase zu erzielen, ist es bekannt, entweder eine Nachwärmung durch einen zusätzlich in der Abgasleitung eingebauten Wärmetauscher, der mit einem Heizmedium niederer Temperatur, wie Heizungsrücklauf, betrieben wird, vorzunehmen oder aber die abgekühlten Abgase durch Rückführung in dem Gehäuse des Wärmetauschers von unten nach oben nachzuwärmen, siehe beispielsweise DE 39 11 276 oder DE 32 17 782 A1, wobei die Abgase jedoch ungleichmäßig erwärmt werden, je nachdem ob sie an heißen Flächen oder kalten Flächen entlangströmen.

Aus der NL-A-7612508 ist eine gattungsgemäße Anlage bekannt geworden, bei der die heißen Abgase in einem von dem Rückwasser eines Heizungskreises beaufschlagten Wärmetauscher bis unter den Wassertaupunkt abgekühlt werden sollen, wobei auch im Wärmetauscher ein Bypass mit Drosselklappe vorgesehen werden kann. Der Einsatz von Heizungsrückwasser gewährleistet jedoch bei wechselnder Witterung und Temperatur des Heizungskreises nicht stets die vollständige Abkühlung der Abgase bis unter den Wassertaupunkt. Auch ist die Nachwärmung der abgekühlten Abgase durch kreuzende gasführende Leitungen, wobei die heißen Abgase nur das Abzugsrohr umspülen, nicht ausreichend, um die erforderliche Nachwärmung und Vermeidung von nach Kondensation des Abgases sicherzustellen.

Zur Lösung dieser Aufgabe wird bei dem gattungsgemäßen Verfahren zur Rückgewinnung von Wärme aus den Abgasen vorgeschlagen, daß die letzte Stufe des Wärmetauschers mit dem Medium eines Niedertemperaturkreises beaufschlagt wird zwecks Abkühlung der Abgase bis unter den Wassertaupunkt und die von Kondensat befreiten kalten Abgase zwecks stets ausreichender Wiedererwärmung durch eine Mehrzahl von den Strömungskanal der heißen Abgase durchsetzende Nachwärmkanäle durchgeleitet werden.

Bei dem erfindungsgemäßen Verfahren wird die Nachwärmung der Abgase, um einen ausreichenden Kaminzug zu gewährleisten, mittels der noch ganz heißen Abgase als Vorstufe des Wärmetauschers für die Rückgewinnung der Wärme bzw. vorgeschaltet zu dem Wärmetauscher vorgenommen. Dies bedeutet eine wesentliche Vereinfachung der Verfahren und der Vorrichtungen zur Rückgewinnung von Wärme aus den Abgasen von Feuerungsanlagen. Auf diese Weise wird auch gewährleistet, daß die bis unter den Wassertaupunkt abgekühlten Abgase in jedem Fall ausreichend aufgewärmt werden. Darüber hinaus gestattet die Erfindung die wirksame Oberfläche für den Wärmetausch entsprechend der Menge des zu erwärmenden Abgasvolumens zu gestalten. Zur Durchführung des erfindungsgemäßen Verfahrens wird von bekannten Vorrichtungen zur Rückgewinnung von Wärme aus den Abgasen von Feuerungsanlagen für Heizkessel durch Abkühlen der Abgase bis unter den Wassertaupunkt und nachfolgendem Wiedererwärmen der Abgase über den Wassertaupunkt ausgegangen, die mit einem Heizkessel mit einem Kreislauf im Heizungsvorlauf und Heizungsrücklauf geführten Heizmedium und einer Abgasleitung für die den Heizkessel verlassenden Abgase zum Abführen in den Kamin und einem mindestens einstufigen Wärmetauscher, der in die Abgasleitung einbaubar ist, ausgestattet sind, wobei die Zuführung der Abgasleitung mittels einer Abgasverteilerhaube zu der ersten Stufe des Wärmetauschers mit Eintritt der Abgase von oben in die erste Stufe des Wärmetauschers und Austritt der Abgase unten aus der letzten Stufe des Wärmetauschers erfolgt. Hierbei ist jede Stufe des Wärmetauschers mit Anschlüssen für die horizontale Durchleitung je eines Mediums je eines Heizkreises ausgerüstet und unterhalb des Wärmetauschers eine Wende- und Sammelkammer mit Kondensatablauf und sich an die Wende- und Sammelkammer anschließenden aufwärts erstreckenden Abzugsrohr für die Ableitung des abgekühlten Abgases in den Kamin ausgebildet.

Erfindungsgemäße Vorrichtungen zur Durchführung des erfindungsgemäßen Verfahrens sind den kennzeichnenden Merkmalen der Ansprüche 2 bis 9 entnehmbar. Die erfindungsgemäße Vorrichtung zeichnet sich dadurch aus, daß im Bereich der Zuführung der heißen Abgase zu dem mindestens einstufigen Wärmetauscher horizontal den Strömungskanal der heißen Abgase durchsetzende Nachwärmkanäle für die Durchleitung der bis unter den Wassertaupunkt abgekühlten Abgase im Kreuz-Gegenstrom-Verfahren und Nachwärmen derselben bis über den Wassertaupunkt vorgesehen sind.

Die Erfindung ist in einfacher Weise an unterschiedliche Ausbildungen und Aufbauten von Feuerungsanlagen mit Vorrichtungen zur Wärmerückgewinnung aus den heißen Abgasen mittels Wärmetauschern anpaßbar und ausführbar. Die Erfindung kann dadurch realisiert werden, daß die Nachwärmkanäle beispielsweise innerhalb der Abgasverteilerhaube, die die heißen Abgase dem Wärmetauscher zuführt, angeordnet sind, so daß die heißen Abgase zuerst auf die Nachwärmkanäle mit den kalten unter den Wassertaupunkt abgekühlten Abgasen treffen und anschließend dem eigentlichen Wärmetauscher zur Rückgewinnung der Wärme aus den heißen Abgasen bis unter den Taupunkt zugeführt werden.

Die erfindungsgemäße Nachwärmung der bis unter den Wassertaupunkt abgekühlten Abgase auf eine ausreichende Temperatur für den Kaminabzug erfolgt also in einer Vorstufe zu dem Wärmetauscher, d.h. sie wird diesem vorgeschaltet, so daß die heißen Abgase, bevor sie auf den eigentlichen Wärmetauscher treffen, die Nachwärmung der bis unter den Wassertaupunkt abgekühlten Abgase durchführen. Die Nachwärmung erfolgt im Kreuz-Gegenstrom-Verfahren, heißes Abgas wird vertikal von oben nach unten und kaltes Abgas horizontal geführt. Die Kanäle, die das kalte Abgas führen, können in verschiedenen Bereichen und Ausführungen der Vorrichtung zur Rückgewinnung von Wärme, nämlich dem Wärmetauscher, zugeordnet werden. Beispielsweise ist es möglich, die Kanäle zum Nachwärmen der kalten Abgase zwischen Abgasverteilerhaube und Wärmetauscher anzuordnen. Darüber hinaus ist es auch möglich, die Kanäle für die Nachwärmung in einem separaten Wärmetauscher, sozusagen einem kleinen Baustein, unterzubringen und diesen zwischen Abgasverteilerhaube und Wärmetauscher oder innerhalb der Abgasverteilerhaube anzuordnen. Darüber hinaus ist es auch möglich, die erste Stufe eines mehrstufigen Wärmetauschers für die Nachwärmung der kalten Abgase zu benutzen und erst die nachfolgenden Stufen des Wärmetauschers für die Rückgewinnung der Wärme aus den heißen Abgasen zu benutzen.

Eine Vorrichtung zur Rückgewinnung von Wärme aus Abgasen mit einem kleinen kompakten Wärmetauscher, der zwei oder drei Stufen enthält, in Kleinbauweise für Heizungsanlagen von beispielsweise Ein- oder Mehrfamilienhäusern zur Nachwärmung der durch mindestens einen Wärmetauschkreis abgekühlten Abgase wird so ausgebildet, daß die abgekühlten Abgase über ein Abzugsrohr zur Nachwärmung in die erste Stufe des Wärmetauscher zurückgeführt und durchgeleitet werden, so daß sie von den heißen, den Wärmetauscher anströmenden Abgasen als erste aufgewärmt werden, wobei sie schnell durch die erste Stufe hindurchgeleitet werden und bei ausreichender Aufwärmung auf beispielsweise 40°C dann unmittelbar dem Kamin zugeführt werden können. Die nur geringfügig abgekühlten heißen Abgase können dann beim weiteren Durchlaufen der weiteren Stufen des Wärmetauschers die restliche Wärme an die vorhandenen Heizkreise abgeben.

Auch bei Kompaktanlagen von Wärmetauschern größerer Dimensionen die separat neben Feuerungsanlagen aufgestellt werden, kann die Rückführung der bis unter den Taupunkt abgekühlten und getrockneten, d.h. von Kondensat befreiten Abgase, über ein Abzugsrohr wieder in die erste Stufe des Wärmetauschers zurückgeführt werden, so daß sie durch das Anströmen der heißen Abgase auf eine für den thermischen Auftrieb für den Kamin ausreichende Temperatur aufgewärmt werden.

Zusätzlich kann es bei größeren Anlagen zweckmäßig sein, in den Abzugsverbindungskanal zum Kamin noch einen Ventilator zum Überwinden der geräteeigenen Widerstände einzubauen.

Die Erfindung ist mit Vorteil bei Wärmetauschern anzuwenden, die aus Modulen stufenweise zusammenbaubar sind je nach Größe und in Anpassung in die Feuerungsanlagen und die zu verarbeitenden Abgasmengen. Hierbei sind sowohl sehr kleine Wärmetauscheranlagen als auch sehr große Wärmetauscheranlagen, beispielsweise für Krankenhäuser oder Hochhäuser, entsprechend herstellbar. Der besondere Vorteil der Erfindung ist darin zu sehen, daß die Nachwärmung der kalten Abgase in einer der eigentlichen Wärmerückgewinnung dienenden meist mehrstufigen Wärmetauscher vorgeschalteten Stufe, die unabhängig vom Wärmetauscher gestaltbar ist, durchführbar ist.

Die Erfindung wird nachfolgend an Ausführungsbeispielen erläutert, ist jedoch nicht auf die Anwendung derselben beschränkt. Es zeigen
- Figur 1: eine Wärmerückgewinnungsanlage in schematischer Darstellung mit Nachwärmvorrichtung zwischen Abgaseverteilerhaube und Wärmetauscher
- Figur 2: eine in eine Abgasleitung eingebaute kompakte zweistufige Wärmerückgewinnungsanlage mit integrierter Nachwärmung
- Figur 3: eine schematische Darstellung einer mehrstufigen Wärmerückgewinnungsanlage mit innerhalb der Wärmetauscheranlage rückgeführter Abgasleitung und integrierter Nachwärmung.

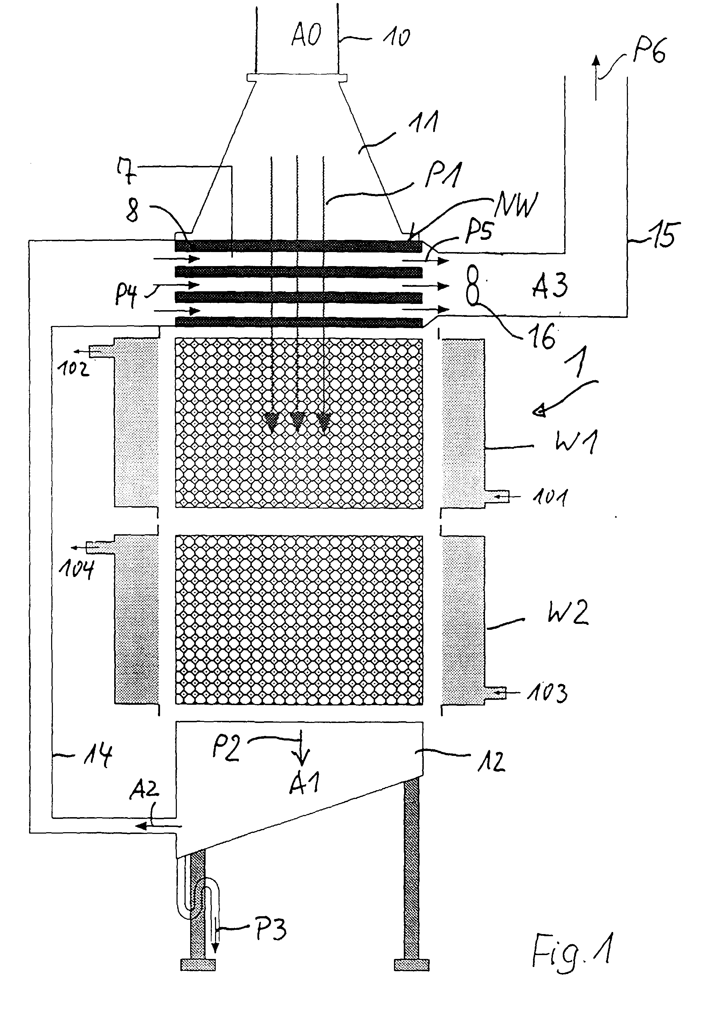

In der Figur 1 ist eine Wärmetauscheranlage 1 zur Rückgewinnung von trockener und latenter Wärme aus den heißen Abgasen von Feuerungsanlagen dargestellt.

Die heißer Abgase A0 werden durch die Abgasleitung 10 mit Abgasverteilerhaube 11 in Pfeilrichtung P1 von oben nach unten den Wärmetauscher 1 anströmend diesem zugeführt. Für die Wärmerückgewinnung ist gemäß Figur 1 ein zweistufiger Wärmetauscher zusammengesetzt aus einzelnen Wärmetauschermodulen in Blockform im Baukastensystem vorgesehen, wobei hier zwei Wärmetauscherstufen W1 und W2 übereinander angeordnet sind, die jeweils einen Eingang 101, 103 und einen Ausgang 102, 104 aufweisen. An die Eingänge und Ausgänge werden dann die jeweiligen Medien, deren Temperatur angehoben werden soll, angeschlossen. Die Wärmetauschermodule sind beispielsweise als Kreuz-Strom-Wärmetauscher aufgebaut mit senkrecht von oben nach unten in Pfeilrichtung P1 verlaufenden Kanälen für die heißen Abgase und waagerecht hierzu verlaufenden Kanälen für die Durchleitung des zu erwärmenden Mediums. Die Wärmetauschermodule sind bevorzugt entweder aus Graphit oder auf Basis Keramik erstellt.

Die Wärmetauschermodule der einzelnen Stufen werden horizontal von den zu erwärmenden Medien durchströmt, wobei die Wärme aus den durch die vertikalen Kanäle strömenden heißen Abgasen abgegeben wird und abkühlen. Die bis unter den Taupunkt abgekühlten Abgase A1 treten aus der letzten Stufe des Wärmetauschers in die unterhalb des Wärmetauschers ausgebildete Wende- und Sammelkammer 12 ein, siehe Pfeil P2. Das anfallende Kondensat wird in der Wende- und Sammelkammer 12 gesammelt und von dort in Pfeilrichtung P3 in eine Neutralisationsstation abgeleitet. Von der Wende- und Sammelkammer 12 werden die abgekühlten und gereinigten Abgase A2 über das Abzugsrohr 14 der Nachwärmvorrichtung NW zugeführt. In dem Ausführungsbeispiel der Erfindung gemäß Figur 1 ist die Nachwärmvorrichtung NW zwischen dem Ausgang der Abgasverteilerhaube 11 und dem Eingang zu der ersten Stufe W1 des Wärmetauschers 1 angeordnet. Die Nachwärmeinrichtung NW enthält Nachwärmkanäle 7, die den aus der Abgasverteilerhaube 11 austretenden Abgasstrom P1 horizontal durchsetzen, wobei die kalten Abgase in Pfeilrichtung P4 horizontal durch die Nachwärmkanäle 7 strömen. Die Kanäle 7 werden beispielsweise von Rohren 8 gebildet, die ebenfalls aus korrosionsfesten Materialien, wie beispielsweise Keramik hergestellt sind. Nach Verlassen der Nachwärmvorrichtung bei Austritt aus den Kanälen 7 in Pfeilrichtung P5 treten die nunmehr auf eine ausreichende Temperatur für den Abzug durch den Kamin, beispielsweise etwa 40°C, wieder aufgewärmten Abgase A3 in das Abzugsverbindungsrohr 15 ein und werden dann in Pfeilrichtung P6 dem Kamin zugeführt.

Es ist auch möglich, die Nachwärmvorrichtung mittels der die Kanäle 7 aufweisenden Rohre 8 innerhalb der Abgasverteilerhaube 11 anzuordnen, wenn eine kleinere und kompaktere Bauweise oder die Gestaltung der Abgashaube dies gestattet.

Damit ist es möglich, die Wärmerückgewinnungsanlage gemäß Figur 1 ohne Kaminveränderung auch an bereits bestehende Kamine anzuschließen. Mit der erfindungsgemäßen Anlage ist die Aufwärmung der abgekühlten Abgase exakt auf das jeweilige Kaminverhalten im Einzelfall bestimmbar und anpaßbar. Zusätzlich ist es noch möglich, am Kamin bzw. vor dem Kamineingang im Abgasverbindungsrohr 15 einen Ventilator 16 anzuordnen, der die durch den Wärmetauscher aufgebauten Widerstände überwindet und gewährleistet, daß der für die Abgasführung durch den Kamin notwendige Unterdruck am Kamineintritt vorhanden ist.

Die Stufen W1 und W2 des Wärmetauschers 1 gemäß Figur 1 können mit dem Heizungsrücklauf und weiteren Niedertemperaturkreisen in bekannter Weise verbunden werden.

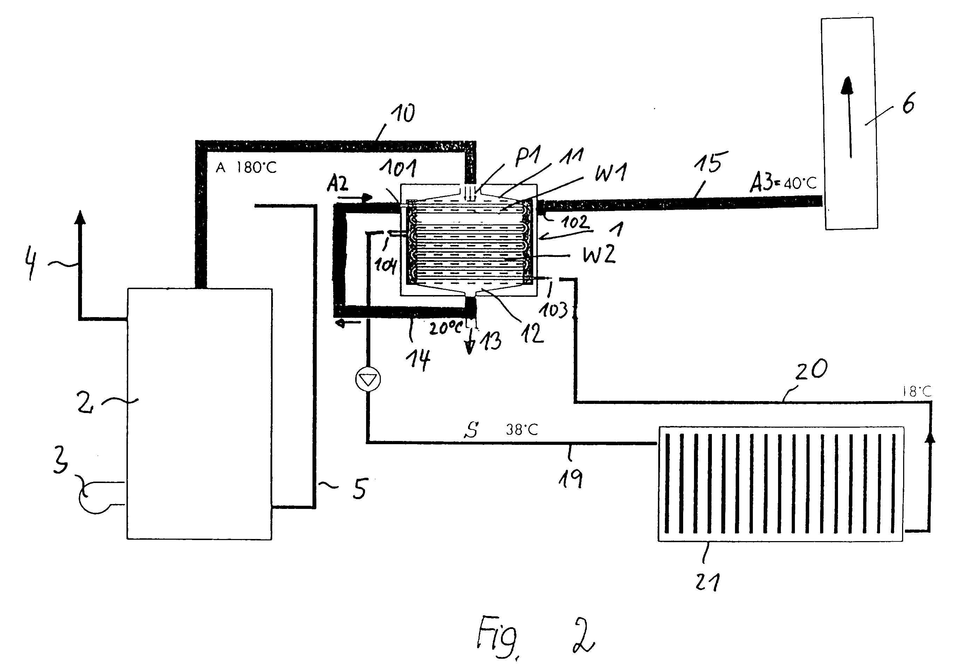

Für kleinere Heizungsanlagen mit geringeren Abgasmengen, beispielsweise in Ein- oder Mehrfamilienhäusern, wird eine Wärmerückgewinnungsanlage gemäß Figur 2 vorgeschlagen, die einen zweistufigen Wärmetauscner 1 mit Stufen W1 und W2 aufweist, und die als kompakte Einheit in die Abgasleitung 10 zwischen einem Heizkessel 2 und Kamin 6 eingebaut ist. Die gesamte Feuerungsanlage umfaßt den Heizkessel 2, den Brenner 3 und das umlaufende Heizungswasser mit dem Heizkessel zugeführtem Heizungsrücklauf 5 und aus dem Heizkessel kommenden Heizungsvorlauf 4. Die heißen Abgase AO aus dem Heizungskessel 2 gelangen über die Abgasleitung 10 mit Temperaturen von etwa 180°C von oben in die Wärmetauscher 1 mit den Wärmetauscherstufen W1 und W2. Jede Stufe ist als Durchstömungskammer mit Anschlüssen für das horizontale Durchströmen eines Mediums ausgebildet. Der Wärmetauscher 1 ist so angeordnet, daß seine Abgaskanäle bevorzugt das vertikale Durchströmen der Abgase von oben nach unten in Pfeilrichtung P1 gestatten. Damit die Abgase entsprechend vertikal den Wärmetauscher von oben anströmen können, ist die Abgasleitung 10 oberhalb des Wärmetauschers haubenartig 11 geformt. Die Abgase durchströmen die Stufen W1 und W2 und gelangen in die unterhalb des Wärmetauschers sich anschließende Wende- und Sammelkammer 12, die die abgekühlten Abgase auffängt. Das im Bereich der Wende- und Sammelkammer 12 anfallende Kondensat wird nach unten in Pfeilrichtung 13 zu einem Neutralisationsbehälter abgeführt. Die erste Stufe W1 des Wärmetauschers dient der Nachwärmung der bis unter den Taupunkt abgekühlten Abgase A1 auf eine ausreichende Temperatur von beispielsweise 40°C für einen ausreichenden thermischen Auftrieb im Kamin. Die zweite Stufe W2 des Wärmetauschers dient der Erwärmung eines Mediums eines Niedertemperaturkreises. Die aus der Wende- und Sammelkammer 12 austretenden abgekühlten Abgase A1 werden über das Abzugsrohr 14 der ersten Stufe W1 des Wärmetauschers zugeführt und beim Durchströmen auf die gewünschte Temperatur A2 erwärmt. Die abgekühlten Abgase haben beispielsweise eine Temperatur von 20°C, die wiederaufgewärmten Abgase eine solche von 40°C.

Die weitere Wärme wird den heißen Abgasen in der Stufe W2 entzogen, wobei beispielsweise ein Solekreislauf mit Niedertemperatur vorgesehen ist, wobei ein Medium mit 18°C der zweiten Stufe des Wärmetauschers zugeführt und auf eine Temperatur von 38°C erwärmt wird, die dann in einem Gegenströmer wieder abgegeben wird. Dieser Kreislauf wird aucn beispielsweise als Solekreislauf S bezeichnet.

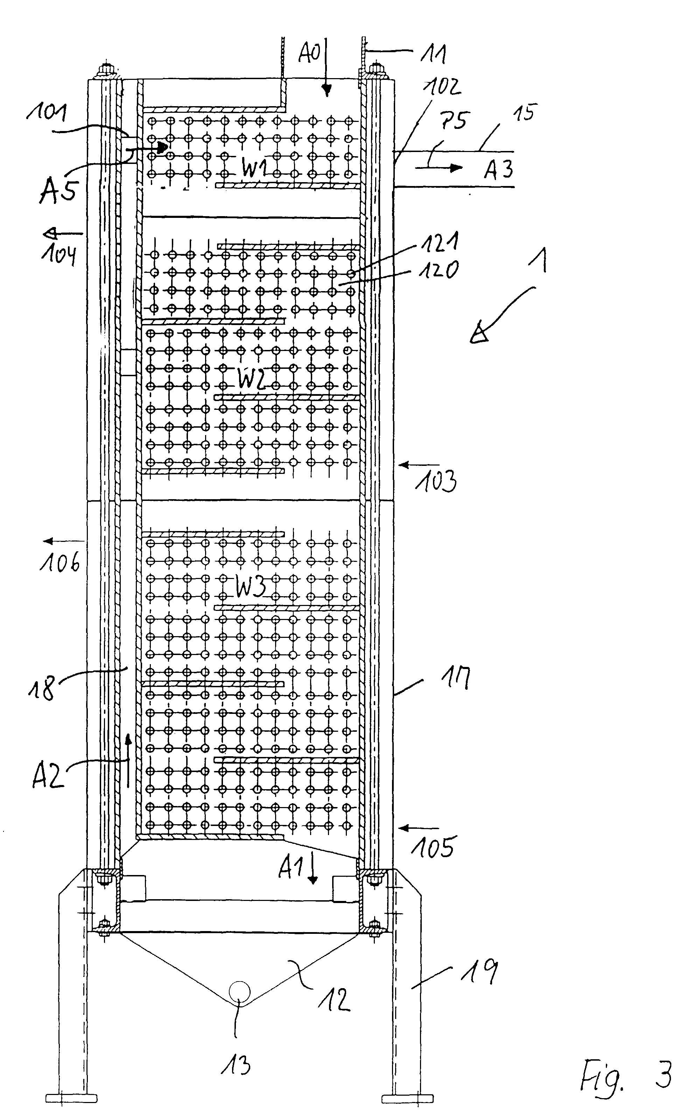

In der Figur 3 ist die Anwendung der Erfindung auf eine Wärmetauscheranlage 1 dargestellt, die für größere Heizungs- und Feuerungsanlagen gedacht ist, beispielsweise in Krankenhäusern, bei denen ein mehrstufiger großer Wärmetauscher neben einem Heizkessel aufgestellt wird. Der Wärmetauscher enthält beispielsweise drei Stufen W1, W2, W3, die in einem Gehäuse 17 mit Gestell 19 untergebracht sind. Die horizontalen Kanäle sind mit 121, die vertikalen Kanäle des Wärmetauschers mit 120 bezeichnet. Jede Stufe W1, W2, W3 ist mit einem Eintritt und einem Austritt für das durch die horizontalen Kanäle zum Erwärmen durchzuleitende Medium ausgestattet, wie schematisch durch die Pfeile angedeutet. Die Eingänge sind bei den Stufen W2 und W3 mit 103, 105 und die Ausgänge mit 104, 106 bezeichnet.

Der Eingang in Stufe W1 erfolgt aus dem zwischen dem Gehäuse 17 und den Wärmetauscherstufen längs einer Seite vertikal sich erstreckenden Abzugskanal 18 in Pfeilrichtung A5. Der Austritt aus Stufe W1 erfolgt in Pfeilrichtung P5 in den Abzugskanal 15 Richtung Kamin.

Die vertikalen Kanäle 120 der Wärmetauscherstufen W1 bis W3 sind durch horizontal sich erstreckende, von den seiten ausgehende frei endende, abwechselnd angeordnete und voneinander beabstandete Trennwände 126, 127 so unterteilt, daß ein mäanderförmiger Strömungsweg von oben nach unten durch die vertikalen Kanäle entsteht. Die Heißen von der Kesselanlage kommenden Abgase A0 werden über die Abgasleitung mit Verteilerhaube 11 von oben der ersten Wärmetauscherstufe W1 zugeführt und durchströmen den Wärmetauscher mäanderförmig von oben nach unten und treten an der untersten Stufe W3 abgekühlt bis auf den Taupunkt als Abgase A1 in Pfeilrichtung in eine -Wende- und Sammelkammer 12 ein. Das sich hier bildende Kondensat K wird in einen Neutralisationsbehälter 13 abgeführt. Die Wärmetauscherstufen W1 bis W3 sind an drei verschiedene Heizkreise angeschlossen. Hierbei dient die erste Stufe W1 der Nachwärmung der bis unter den Taupunkt abgekühlten Abgase Al auf eine ausreichende Temperatur für den thermischen Auftrieb beim Abzug durch den Kamin.

Die zweite Stufe W2 dient der Vorwärmung des Heizungsrücklaufes, der bei 103 eintritt und bei 104 austritt und durch die Kanäle 121 geleitet wird. Die dritte Stufe W3 dient zum Beispiel der Erwärmung von Brauchwasser, das bei 105 eintritt und bei 106 austritt und durch die Kanäle 121 geleitet wird.

Das abgekühlte und gereinigte Abgas A2 wird aus der Wende- und Sammelkammer durch den zwischen den Wärmetauscherstufen W1, W2, w3 und dem Gehäuse 17 gebildeten Abzugskanal 18 aufwärts geführt und über den Eingang 101 der ersten Stufe W1 des Wärmetauschers zur Nachwärmung zugeführt, siehe Pfeil A5. In der Stufe W1 wird das bis unter den Taupunkt abgekühlte Abgas A2 durch die heißen durch die Kanäle 120 von oben nach unten strömenden Abgase A0 auf eine ausreichende für den thermischen Auftrieb in dem Kamin benötigte Temperatur aufgewärmt. Die wiedererwärmten Abgase A3 verlassen dann den Wärmetauscher und gelangen über den Abzugskanal 15 in den Kamin.

Für die Wärmtauscheranlage nach Figur 3 werden bevorzugt Wärmetauscher aus Graphit oder Keramik eingesetzt.

## Patentansprüche

1. Verfahren zur Rückgewinnung von Wärme aus den Abgasen (A0) von Feuerungsanlagen für Heizkessel mit einem im Heizkreis geführten Medium zum Abkühlen der Abgase (A0) beim Durchleiten der Abgase (A0) von oben nach unten durch einen mehrstufigen Wärmetauscher, wobei die Stufen des Wärmetauschers von dem wärmeaufnahmebereiten Medium des Heizungsrücklaufes des Heizkreises horizontal durchströmt werden und die Abgase (A0) in der letzten Stufe des Wärmetauschers bis unter den Wassertaupunkt unter Kondensatbildung abgekühlt und nachfolgend zur Erzielung eines ausreichenden thermischen Auftriebs im Kamin bis über den Wassertaupunkt erwärmt werden, wobei die bis unter den Wassertaupunkt abgekühlten Abgase (A2) im Wärmekontakt mit den heißen aus dem Heizkessel austretenden Abgasen (A0) durch Kreuzen der die kalten bzw. heißen Abgase (A0, A2) führenden Leitungen im Bereich der Zuführung der heißen Abgase (A0) zu dem Wärmetauscher zwecks Wiedererwärmung gebracht werden, wobei die kalten Abgase (A2) horizontal und die heißen Abgase (A0) vertikal von oben nach unten geführt werden, **dadurch gekennzeichnet**, daß die letzte Stufe des Wärmetauschers mit dem Medium eines Niedertemperaturkreises beaufschlagt wird zwecks Abkühlung der Abgase (A0) bis unter den Wassertaupunkt und die von Kondensat befreiten kalten Abgase (A2) zwecks stets ausreichender Wiedererwärmung durch eine Mehrzahl von den Strömungskanal der heißen Abgase (A0) durchsetzende Nachwärmkanäle (7) durchgeleitet werden.

2. Vorrichtung zur Rückgewinnung von Wärme aus den Abgasen (A0) von Feuerungsanlagen für Heizkessel durch Abkühlen der Abgase (A0) bis unter den Wassertaupunkt und nachfolgendem Wiedererwärmen der Abgase (A2) über den Wassertaupunkt mit einem Heizkessel mit einem im Kreislauf im Heizungsvorlauf und Heizungsrücklauf geführten Heizmedium und einer Abgasleitung für die den Heizkessel verlassenden Abgase (A0) zum Abführen in den Kamin und einem mehrstufigen Wärmetauscher, der in die Abgasleitung (10) einbaubar ist mit Zuführung der Abgase (A0) aus der Abgasleitung (10) mittels einer Abgasverteilerhaube (11) zu der ersten Stufe (W1) des Wärmetauschers und Eintritt der Abgase (A0) von oben in die erste Stufe (W1) des Wärmetauschers und Austritt der Abgase unten aus der letzten Stufe (W2) des Wärmetauschers, wobei jede Stufe (W1, W2) des Wärmetauschers Anschlüsse (101, 103, 102, 104) für die horizontale Durchleitung je eines Mediums je eines Heizkreises enthält und unterhalb des Wärmetauschers eine Wende- und Sammelkammer (12) mit Kondensatablauf und einem sich an die Wende- und Sammelkammer (12) anschließenden aufwärts erstreckenden Abzugsrohr (14) für die Ableitung des abgekühlten Abgases (A2) in dem Kamin (15) ausgebildet ist, und die heißen bzw. kalten Abgase (A0, A2) führenden Abgasleitung bzw. Abzugsrohr (11, 14) einander zwecks Wärmekontakt kreuzen, wobei die kalten Abgase (A2) horizontal und die heißen Abgase (A0) vertikal von oben nach unten geführt werden, **dadurch gekennzeichnet,** daß die letzte Stufe des Wärmetauschers mit dem Medium eines Niedertemperaturkreises beaufschlagbar ist und das im Bereich der Zuführung der heißen Abgase (A0) zu dem Wärmetauscher (1) eine Mehrzahl von den Strömungskanal der heißen Abgase (A0) durchsetzende Nachwärmkanäle (7) für die Durchleitung der bis unter den Wassertaupunkt abgekühlten und von Kondensat befreiten Abgase (A2) zwecks stets ausreichendem Nachwärmen derselben bis über den Wassertaupunkt vorgesehen sind.

3. Vorrichtung nach Anspruch 2,
**dadurch gekennzeichnet,** daß die Nachwärmkanäle (7) innerhalb der Abgasverteilerhaube (11) angeordnet sind.

4. Vorrichtung nach Anspruch 2,
**dadurch gekennzeichnet,** daß die Nachwärmkanäle (7) zwischen der Abgasverteilerhaube (11) und dem mehrstufigen Wärmetauscher (1) angeordnet sind.

5. Vorrichtung nach Anspruch 2,
**dadurch gekennzeichnet,** daß die Nachwärmkanäle (7) in einer dem mehrstufigen Wärmetauscher (1) vorgeschalteten Vorstufe ausgebildet sind.

6. Vorrichtung nach Anspruch 2,
**dadurch gekennzeichnet,** daß die Nachwärmkanäle (7) als separater Wärmetauscher ausgebildet sind.

7. Vorrichtung nach Anspruch 5,
**dadurch gekennzeichnet,** daß bei einem zweistufigen Wärmetauscher (1) die erste Stufe als Vorstufe zur Nachwärmung der abgekühlten Abgase mit den bis unter den Wassertaupunkt abgekühlten Abgase beaufschlagbar und die zweite Stufe des Wärmetauschers mit dem Medium eines Niedertemperaturkreises beaufschlagbar ist.

8. Vorrichtung nach Anspruch 5,
**dadurch gekennzeichnet,** daß bei einem dreistufigen Wärmetauscher (1) die erste Stufe des Wärmetauschers als Vorstufe zur Nachwärmung der abgekühlten Abgase mit den bis unter den Taupunkt abgekühlten Abgasen beaufschlagbar und die nächste Stufe des Wärmetauschers mit dem Medium des Heizungsrücklaufes und die dritte Stufe des Wärmetauschers mit dem Medium eines Niedertemperaturkreises beaufschlagbar ist.

9. Vorrichtung nach einem der Ansprüche 2 bis 8,
**dadurch gekennzeichnet,** daß sich an die Nachwärmkanäle (7) das zum Kamin führende Abzugsverbindungsrohr (15) mit einem eingebauten stufenlos regelbaren Ventilator (16) anschließt.

## Claims

1. Method for the recovery of heat from the combustion gases (A0) from furnaces for heating boilers, by means of a medium for cooling the combustion gases (A0), which medium is led in the heating circuit as the said combustion gases (A0) pass through a multi-stage heat exchanger from top to bottom, with the returning heating medium of the heating circuit, which medium is ready to absorb heat, flowing horizontally through the stages of the heat exchanger and the combustion gases (A0) being cooled to below the dew point in the last stage of the heat exchanger, with formation of condensate, and subsequently being heated to above the dew point in order to achieve a sufficient thermal uplift in the flue, with the combustion gases (A2) which have been cooled to below the dew point being brought, for the purpose of reheating, into heat contact with the hot combustion gases (A0), which emerge from the heating boiler, by means of intersecting of the circuits which carry the cold and hot combustion gases (A0, A2), respectively, in the region of the supply of the hot combustion gases (A0) to the heat exchanger, with the cold combustion gases (A2) being led horizontally and the hot combustion gases (A0) being led vertically from top to bottom, **characterised in that** the last stage of the heat exchanger is acted upon by the medium of a low-temperature circuit for the purpose of cooling the combustion gases (A0) to below the dew point, and the cold combustion gases (A2), from which condensate has been removed, are, for the purpose of consistently adequate reheating, passed through a plurality of reheating channels (7) which penetrate the flow channel of the hot combustion gases (A0).

2. Device for the recovery of heat from the combustion gases (A0) from furnaces for heating boilers by cooling the combustion gases (A0) to below the dew point and subsequently reheating the combustion gases (A2) to above the dew point, the device having a heating boiler, which has a heating medium which is led in a circuit in the heating forward run and heating return run, and a combustion-gas line for the combustion gases (A0) leaving the heating boiler for the lead off into the flue, and a multi-stage heat exchanger which can be installed in the combustion-gas line (10), having supply of the combustion gases (A0) from the combustion-gas line (10) to the first stage (W1) of the heat exchanger by means of a combustion gas distribution hood (11), and entry of the combustion gases (A0) into the first stage (W1) of the heat exchanger from above and exit of the combustion gases from the last stage (W2) of the heat exchanger at the bottom, with each stage (W1, W2) of the heat exchanger containing connections (101, 103, 102, 104) for the horizontal lead-through in each case of a medium of a heating circuit, and with there being formed beneath the heat exchanger a reversing and collecting chamber (12) with condensate run-off and a discharge pipe (14) which is connected to the reversing and collecting chamber (12) and extends upwards for carrying off the cooled combustion gases (A2) in the flue (15), and the combustion-gas line and combustion-gas pipe (11, 14) which conduct hot and cold combustion gases (A0, A2), respectively, intersecting one another for the purpose of heat contact, with the cold combustion gases (A2) being led horizontally and the hot combustion gases (A0) being led vertically from top to bottom,
**characterised in that** the medium of a low temperature circuit can be admitted to the last stage of the heat exchanger, and in that there is provided in the region of the supply of the hot combustion gases (A0) to the heat exchanger (1) a plurality of reheating channels (7), which cross the flow channel of the hot combustion gases (A0), for the leading through of the combustion gases (A2) which have been cooled to below the dew point and from which condensate has been removed, for the purpose of consistently adequately reheating the same to above the dew point.

3. Device according to claim 2, characterised in that the reheating channels (7) are arranged inside the combustion gas distribution hood (11).

4. Device according to claim 2, characterised in that the reheating channels (7) are arranged between the combustion gas distribution hood (11) and the multi-stage heat exchanger (1).

5. Device according to claim 2, characterised in that the reheating channels (7) are constructed in a preliminary stage interposed upstream of the multi-stage heat exchanger (1).

6. Device according to claim 2, characterised in that the reheating channels (7) are constructed as separate heat exchangers.

7. Device according to claim 5, characterised in that, in the case of a two-stage heat exchanger (1), the first stage, as a preliminary stage for the reheating of the cooled combustion gases, can be acted upon by the combustion gases which have been cooled to below the dew point, and the second stage of the heat exchanger can be acted upon by the medium of a low temperature circuit.

8. Device according to claim 5, characterised in that, in the case of a three-stage heat exchanger (1), the first stage of the heat exchanger, as a preliminary stage for the reheating of the cooled combustion gases, can be acted upon by the combustion gases which have been cooled to below the dew point, the next stage of the heat exchanger can be acted upon by the medium of the heating return, and the third stage of the heat exchanger can be acted upon by the medium of a low temperature circuit.

9. Device according to one of the claims 2 to 8, characterised in that the discharge connection pipe (15), which pipe leads to the flue which has a built-in, continuously adjustable fan (16), is connected to the reheating channels (7).

## Revendications

1. Procédé de récupération de chaleur de gaz d'échappement (A0) d'installations de combustion pour chaudière comportant un fluide mis en circulation de chauffage pour le refroidissement des gaz d'échappement (A0) en faisant passer les gaz d'échappement (A0) de haut en bas à travers un échangeur de chaleur à plusieurs étages, les étages de l'échangeur de chaleur étant parcourus horizontalement par le fluide disposé à absorber la chaleur du retour de chauffage du circuit de chauffage et les gaz d'échappement (A0) étant refroidis au dernier étage de l'échangeur de chaleur jusqu'en dessous du point de rosée avec formation de condensats et ensuite, afin d'obtenir un tirage naturel suffisant dans la cheminée, réchauffés jusqu'au-dessus du point de rosée, les gaz d'échappement refroidis jusqu'en dessous du point de rosée (A2) étant amenés, pour être réchauffés, en contact thermique avec les gaz d'échappement chauds (A0) sortant de la chaudière par croisement des conduits transportant les gaz d'échappement froids et chauds (A0, A2) dans la zone d'amenée des gaz d'échappement chauds (A0) vers l'échangeur de chaleur, les gaz d'échappement froids (A2) étant conduits horizontalement et les gaz d'échappement chauds (A0) verticalement de haut en bas, caractérisé en ce que le dernier étage de l'échangeur de chaleur est alimenté avec le fluide d'un circuit à basse température afin de refroidir les gaz d'échappement (A0) jusqu'en dessous du point de rosée et en ce que les gaz d'échappement froids (A2) débarrassés des condensats sont conduits à travers une pluralité de canaux de réchauffement (7) traversant le canal d'écoulement des gaz d'échappement chauds (A0) afin d'être suffisamment réchauffés.

2. Dispositif de récupération de chaleur de gaz d'échappement (A0) d'installations de combustion pour chaudière par refroidissement des gaz d'échappement (A0) jusqu'en dessous du point de rosée et réchauffement subséquent des gaz d'échappement (A2) au-dessus du point de rosée, comprenant une chaudière avec un fluide caloporteur mis en circulation dans le départ et le retour du chauffage et un conduit de gaz d'échappement pour les gaz d'échappement (A0) quittant la chaudière pour évacuation vers la cheminée et un échangeur de chaleur à plusieurs étages, qui peut être monté dans le conduit de gaz d'échappement (10), avec amenée des gaz d'échappement (A0) du conduit de gaz d'échappement (10) vers le premier étage (W1) de l'échangeur de chaleur au moyen d'un dôme de répartition des gaz d'échappement (11) et entrée des gaz d'échappement (10) par le haut dans le premier étage (W1) de l'échangeur de chaleur et sortie par le bas des gaz d'échappement du dernier étage (W2) de l'échangeur de chaleur, chaque étage (W1, W2) de l'échangeur de chaleur présentant des raccordements (101, 102, 103, 104) pour la traversée horizontale d'un fluide chacun par circuit de chauffage et, en dessous de l'échangeur de chaleur, une chambre de retour et de collecte (12) étant construite avec évacuation des condensats et un conduit d'extraction (14) se raccordant à la chambre de retour et de collecte (12) et s'étendant vers le haut pour l'évacuation des gaz d'échappement refroidis (A2) vers la cheminée (15), les conduits ou conduit d'extraction (11, 14) transportant des gaz d'échappement chauds et froids (A0, A2) se croisant mutuellement pour établir le contact thermique, les gaz d'échappement froids (A2) étant conduits horizontalement et les gaz d'échappement chauds (A0) verticalement de haut en bas, caractérisé en ce que le dernier étage de l'échangeur de chaleur peut être alimenté avec le fluide d'un circuit à basse température et en ce que, dans la zone de l'introduction des gaz d'échappement chauds (A0) dans l'échangeur de chaleur (1), une pluralité de canaux de réchauffement (7) traversant le canal d'écoulement des gaz d'échappement chauds (A0) sont prévus pour l'acheminement des gaz d'échappement (A2) refroidis en dessous du point de rosée et débarrassés des condensats pour le réchauffement suffisant de ceux-ci jusqu'au-dessus du point de rosée.

3. Dispositif suivant la revendication 2, caractérisé en ce que les canaux de réchauffement (7) sont disposés à l'intérieur du dôme de répartition des gaz d'échappement (11).

4. Dispositif suivant la revendication 2, caractérisé en ce que les canaux de réchauffement (7) sont disposés entre le dôme de répartition des gaz d'échappement (11) et l'échangeur de chaleur à plusieurs étages (1).

5. Dispositif suivant la revendication 2, caractérisé en ce que les canaux de réchauffement (7) sont formés dans un étage préalable placé en amont de l'échangeur de chaleur à plusieurs étages (1).

6. Dispositif suivant la revendication 2, caractérisé en ce que les canaux de réchauffement (7) sont formés sous la forme d'un échangeur de chaleur séparé.

7. Dispositif suivant la revendication 5, caractérisé en ce que, pour un échangeur de chaleur (1) à deux étages, le premier étage peut, comme étage préalable au réchauffement des gaz d'échappement refroidis, être alimenté avec les gaz d'échappement refroidis jusqu'en dessous du point de rosée et le deuxième étage de l'échangeur de chaleur peut être alimenté avec le fluide d'un circuit à basse température.

8. Dispositif suivant la revendication 5, caractérisé en ce que, pour un échangeur de chaleur (1) à trois étages, le premier étage de l'échangeur de chaleur peut, comme étage préalable au réchauffement des gaz d'échappement refroidis, être alimenté avec les gaz d'échappement refroidis jusqu'en dessous du point de rosée et l'étage suivant de l'échangeur de chaleur avec le fluide du retour de chauffage et le troisième étage de l'échangeur de chaleur peut être alimenté avec le fluide d'un circuit à basse température.

9. Dispositif suivant l'une des revendications 2 à 8, caractérisé en ce que le conduit d'extraction (15) vers la cheminée avec ventilateur (16) intégré à vitesse réglable en continu est raccordé aux canaux de réchauffement (7).
